(19) Europäisches Patentamt / European Patent Office / Office européen des brevets

(11) **EP 2 702 104 B1**

(12) **EUROPEAN PATENT SPECIFICATION**

(45) Date of publication and mention of the grant of the patent:
**10.02.2016 Bulletin 2016/06**

(21) Application number: **12718843.1**

(22) Date of filing: **24.04.2012**

(51) Int Cl.:
**C09C 1/02** (2006.01)     **C09C 1/04** (2006.01)
**C09C 1/30** (2006.01)     **C09C 1/36** (2006.01)
**C09C 3/08** (2006.01)     **B82Y 30/00** (2011.01)
**C08K 13/02** (2006.01)

(86) International application number:
**PCT/US2012/034769**

(87) International publication number:
**WO 2012/148898 (01.11.2012 Gazette 2012/44)**

(54) **TREATED INORGANIC PIGMENTS HAVING IMPROVED BULK FLOW AND THEIR USE IN POLYMER COMPOSITIONS**

BEHANDELTE ANORGANISCHE PIGMENTE MIT VERBESSERTEM MASSENFLUSS UND IHRE VERWENDUNG IN POLYMERZUSAMMENSETZUNGEN

PIGMENTS INORGANIQUES TRAITÉS PRÉSENTANT UNE CIRCULATION APPARENTE AMÉLIORÉE ET LEUR UTILISATION DANS DES COMPOSITIONS DE POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2011 US 201161480101 P**

(43) Date of publication of application:
**05.03.2014 Bulletin 2014/10**

(73) Proprietor: **E. I. du Pont de Nemours and Company Wilmington, DE 19898 (US)**

(72) Inventors:
• **KRAITER, Daniel, C.**
  **Wilmington**
  **Delaware 19808 (US)**
• **DIEBOLD, Michael Patrick**
  **Wilmington**
  **DE 19809 (US)**
• **BELL, Timothy Allan**
  **Wilmington**
  **DE 19808 (US)**

(74) Representative: **Towler, Philip Dean**
  **Dehns**
  **St Bride's House**
  **10 Salisbury Square**
  **London EC4Y 8JD (GB)**

(56) References cited:
**EP-A1- 1 760 116     EP-A1- 2 067 747**

• **DATABASE WPI Week 199036 Thomson Scientific, London, GB; AN 1990-272700 XP002678048, & JP 2 194065 A (TAYCA CORP) 31 July 1990 (1990-07-31)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the Disclosure

The present disclosure relates to treated inorganic pigments, more particularly treated titanium dioxide, having an improved bulk flow; a process for their preparation; and their use in polymer compositions.

Description of the Related Art

High molecular weight polymers, for example, hydrocarbon polymers and polyamides, are melt extruded into shaped structures such as tubing, pipe, wire coating or film by well-known procedures wherein a rotating screw pushes a viscous polymer melt through an extruder barrel into a die in which the polymer is shaped to the desired form, and is then subsequently cooled and solidified into a product, that is, the extrudate, having the general shape of the die. In film blowing processes, as an extruded plastic tube emerges from the die the tube is continuously inflated by air, cooled, collapsed by rolls and wound up on subsequent rolls.

Inorganic powders are added to the polymers. In particular, titanium dioxide pigments are added to polymers for imparting whiteness and/or opacity to the finished article. To deliver other properties to the molded part or film, additional additives are incorporated into the processing step. What is needed is a titanium dioxide that has multiple properties associated with it.

JP2194065A discloses surface treated $TiO_2$ particles.

EP2067747A1 discloses porous $TiO_2$ and methods for producing same.

EP1760116 A1 discloses $TiO_2$, process for the production thereof and resin compositions containing the pigments.

A typical method for combining inorganic pigment particles and polymers utilizes dropping the pigment and polymer through a feed tube into the feed barrel or into the side stuffer of an extruder from which is it then compounded. Alternatively, the inorganic particles can be dropped with the polymer into the cavity of a rotational blender such as a Banbury. The need for improved productivity through higher output is a constant issue with both these methods. Both methods require that the particles flow readily into the reaction chamber. In the first case, the rate at which the blending can occur may be limited by the particles bulk density. This may be key to how fast the rotating screw can pick up the polymer and the particles to effect the combination. If the powder has a higher bulk density, it can be picked up more efficiently resulting in higher output. Similarly the total output of a rotational blender may be limited by the volume occupied by the individual components prior to blending. To improve the productivity of these blenders, it is desirable to decrease the amount of space the powder component takes up. Therefore, if the bulk density of the inorganic particles is increased, it will take up less volume and increase the overall output of the blender. The current disclosure addresses these needs by providing a mechanism for increasing the bulk density of an inorganic pigment particle.

A need exists for an inorganic pigment such as titanium dioxide that has greater bulk density, improved flow characteristics and that is easier to handle in use.

SUMMARY OF THE DISCLOSURE

In a first aspect, the disclosure provides a polymer composition comprising a high molecular weight melt processable polymer and a treated inorganic pigment, wherein the treated inorganic pigment comprises an inorganic pigment, and in particular a titanium dioxide pigment, wherein the inorganic pigment, and in particular a titanium dioxide pigment, comprises a pigment surface area of about 30 to about 75 $m^2$/g; more typically about 40 to about 70 $m^2$/g; and still more typically about 45 to about 65 $m^2$/g, and still more typically about 50 to about 60 $m^2$/g wherein the pigment surface is treated with an organic treating agent comprising a polyalkanol alkane or a polyalkanol amine, present in the amount of at least about 1.5%, more typically at least about 1.8% and still more typically at least about 2% based on the total weight of the treated inorganic pigment; wherein the treated inorganic pigment, and in particular treated titanium dioxide pigment, has a RHI (rat hole index) of about 7 to about 11, more typically about 7 to about 10, and still more typically about 7 to about 9, as measured with a Johanson Hang-Up Indicizer.

BRIEF DESCRIPTION OF THE DRAWINGS

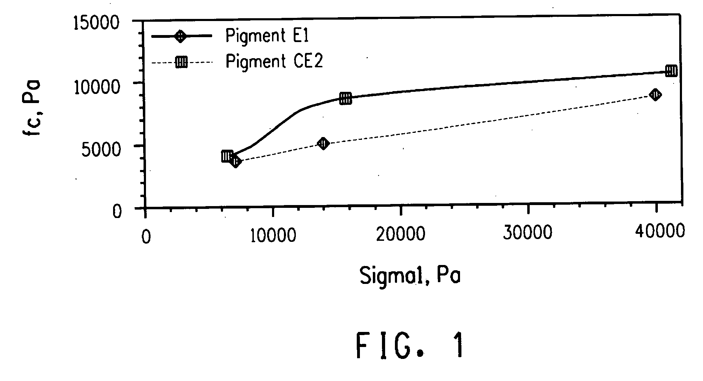

Figure 1 is a flow function graph that depicts the cohesive strength (fc) developed in response to compaction stress (Sigma1)

DETAILED DESCRIPTION OF THE DISCLOSURE

The disclosure relates to a polymer composition comprising a high molecular weight melt processable polymer and a treated inorganic pigment, wherein the treated inorganic pigment comprises an inorganic pigment having a pigment surface area of about 30 to about 75 m$^2$/g; wherein the pigment surface is treated with an organic treating agent comprising a polyalkanol alkane or a polyalkanol amine, present in the amount of at least about 1.5% based on the total weight of the treated inorganic pigment, and wherein the treated inorganic pigment has a RHI (rat hole index) of about 7 to about 11, as measured with a Johanson Hang-Up Indicizer.

Treated Pigment:

It is contemplated that any inorganic pigment will benefit from the surface treatment of this disclosure. By inorganic pigment it is meant an inorganic particulate material that becomes uniformly dispersed throughout a polymer melt, a paper slurry, or coating resin and imparts color and opacity to the polymer melt, paper slurry, or coating resin. Some examples of inorganic pigments include but are not limited to ZnS, TiO$_2$, CaCO$_3$, BaSO$_4$, ZnO, MoS$_2$, silica, talc or clay.

In particular, titanium dioxide is an especially useful pigment in the processes and products of this disclosure. Titanium dioxide (TiO$_2$) pigment useful in the present disclosure may be in the rutile or anatase crystalline form. It is commonly made by either a chloride process or a sulfate process. In the chloride process, TiCl$_4$ is oxidized to TiO$_2$ pigments. In the sulfate process, sulfuric acid and ore containing titanium are dissolved, and the resulting solution goes through a series of steps to yield TiO$_2$. Both the sulfate and chloride processes are described in greater detail in "The Pigment Handbook", Vol. 1, 2nd Ed., John Wiley & Sons, NY (1988). The pigment may be a pigment or nanoparticle.

By "pigment" it is meant that the titanium dioxide pigments have an average size of less than 1 $\mu$m. Typically, the pigments have an average size of from about 0.020 to about 0.95 $\mu$m, more typically, about 0.050 to about 0.75 $\mu$m and most typically about 0.075 to about 0.60 $\mu$m, as measured by Horiba LA300 Particle Size Analyzer

The titanium dioxide pigment may be substantially pure titanium dioxide or may contain other metal oxides, such as silica, alumina, zirconia. Other metal oxides may become incorporated into the pigments, for example, by co-oxidizing or co-precipitating titanium compounds with other metal compounds. If co-oxidized or co-precipitated up to about 20 wt% of the other metal oxide, more typically, 0.5 to 5 wt%, most typically about 0.5 to about 1.5 wt% may be present, based on the total pigment weight.

The titanium dioxide pigment may also bear one or more metal oxide surface treatments. These treatments may be applied using techniques known by those skilled in the art. Examples of metal oxide treatments include silica, alumina, and zirconia among others. Such treatments may be present in an amount of about 0.1 to about 20 wt%, based on the total weight of the pigment, typically about 0.5 to about 12 wt%, more typically about 0.5 to about 3 wt%.

The inorganic pigment may have a surface area of about 30 to about 75 m$^2$/g; more typically about 40 to about 70 m$^2$/g; and still more typically about 45 to about 65 m$^2$/g, and still more typically about 50 to about 60 m$^2$/g.

The pigments of this disclosure may be treated with organic surface treatments such as a polyalkanol alkane or a polyalkanol amine. Some examples of polyalkanol alkanes include trimethylol-propane, trimethylolethane, glycerol, ethylene glycol, propylene glycol, 1,3 propanediol, pentaerythritol, etc. Some examples of polyalkanol amine include 2-amino-2methyl-1-propanol, triethanol amine, monoethanol amine, diethanol amine, 1-amino 2-propanol, or 2-amino ethanol. The organic surface treatment are present in the amounts of at least about 1.5 weight %, more typically in the amount of at least about 1.8 weight %, and most typically in the amount of at least about 2 weight %, based on the total weight of the treated pigment. Amounts of organic surface treatment that are more than 10 % may cause excessive dusting, color change and unnecessary dilution of the TiO$_2$.

Optionally, hydrous oxides are precipitated onto the base TiO$_2$ particles or TiO$_2$ particles that have been coated with inorganic particles. Such hydrous oxides are silica, alumina, zirconia, or the like. These may be added either before or after the addition of inorganic particles. If the hydrous oxides are added prior to addition of inorganic particles, then a filtering and washing step may be used prior to the addition of inorganic particles for colloidal suspensions that may be sensitive to flocculation. It is typical that the inorganic particles are added before the hydrous oxides are precipitated to further anchor the inorganic particles to the TiO$_2$ surface. For example, the method for precipitating the hydrous oxide is described in US Pat. No. Re 27,818 and US Pat. No. 4,125,412. In precipitating the hydrous oxides, sodium silicate is added and neutralized with an acid such as HCl, H$_2$SO$_4$, HNO$_3$, H$_3$PO$_4$ or the like and then sodium aluminate is added and neutralized with acid. Other means of precipitated hydrous alumina are suitable, such as neutralization of aluminum sulfate or aluminum chloride using a base such as NaOH. The amount of hydrous oxide can vary from about 0 to about 16%, based on the total weight of the coated TiO$_2$ pigment. Typical amounts are about 0 to about 8 wt. % silica, more typically about 0 to about 4 wt. % silica, and about 0 to about 8 wt. % alumina, more typically about 0 to about 3 wt. % alumina. The order of addition is not particularly critical, however the hydrous alumina precipitation, if added, is the last preferred addition. The conventional finishing steps such as filtering, washing, drying and grinding are known and are subsequently carried out. The resulting product is dry, finished pigment that is useful for end use applications and/or can be used to prepare a slurry that is useful for end use applications.

After the inorganic wet treatment, the pigment is washed and filtered to remove salts. The process is done in a rotary filter or a filter press. The filter cake is then dried in a spray or flash drier and the drier discharge is de- agglomerated in a hammermill. The pigment is conveyed pneumatically to a fluid energy mill, e.g. micronizer where the final deagglomeration step is done. The organic treatment can be done by spraying alkanol alkane or alkanol amine (neat or as an aqueous solution) at several locations: onto the filtercake before the hammermill, at the micronizer (main inlet, jet nozzle and/or main outlet). The addition can take place exclusively at one location or at more than one location, simultaneously.

Properties of the treated $TiO_2$ particle

While pigments are ultimately utilized for their ability to provide color or opacity to coatings or manufactured goods such as paper or plastic parts, the bulk handling properties of dry pigment prior to incorporation in a process are important.

The loose bulk density determines the size of package necessary to contain a specified mass of pigment, and pigments with excessively low bulk densities may not fill shipping containers (such as trucks) to their specified weight limits, resulting in increased transportation costs. At the consuming site, low bulk density pigments require larger storage vessels for the same mass, increasing capital costs. Screw feeders are commonly used in pigment processing, and their throughput is determined by pigment density. An existing feeder appropriate for one pigment may not be able to feed a second pigment with excessively low bulk density at the required rate. Certain processes for the incorporation of pigment into highly loaded polymer systems (master batching) utilize extruders or batch mixers (such as Banbury mixers) whose throughput capacity is limited by the volumetric displacement of the machine. A pigment with low bulk density does not fill such machines effectively, resulting in a reduction of pigment processing capacity.

The resistance of a dry pigment to flow by gravity will determine the type of equipment (silos, conveyors, and feeders) necessary for reliable storage and retrieval. Pigments with exceptionally poor flow properties may cause blockages in silos and handling systems intended for better-flowing powders. A pigment with superior flow properties can be expected to flow more reliably through existing equipment, and can reduce the investment necessary for new equipment by limiting the need for special features to promote flow. The accuracy of pigment dispensing (dosing) by loss-in-weight feeders will be enhanced by improved flowability, since the pigment will flow more uniformly through the equipment. Similarly, some mixing processes take place more readily if the pigment is readily dispersed (i.e, has little cohesion) when mixed amongst other ingredients.

Flowability in practice is determined by the quotient of pigment cohesive strength, which binds the particles together and impedes flow, and bulk density, which promotes flow under gravitational forces. The properties of cohesive strength and compacted bulk density must be measured under appropriate loading conditions. Using silo design theory (see Powders and Bulk Solids: Behavior, Characterization, Storage and Flow, by Dietmar Schulze, 2007 (English version), Springer, ISBN 978-3-540-73767-4) the silo outlet size necessary for reliable discharge by gravity can be calculated. This outlet size could be that required to prevent bridging (aka arching or doming) or ratholing (aka piping). Due to the nature of the flow patterns that are encountered in pigment handling, ratholing problems are dominant, so methods to predict the required size of outlet to prevent ratholing are most useful. Ratholing propensity otherwise known as rathole index (RHI) can be measured directly with the Johanson Hang-Up Indicizer (Johanson Innovations, San Luis Obispo, CA). The treated inorganic pigment, and in particular titanium dioxide pigment, has a RHI (rat hole index) of about 7 to about 11, more typically about 7 to about 10, and still more typically about 8 to about 9. Ratholing propensity can also be calculated from cohesive strength measurements made with shear cell devices such as the Jenike Shear Cell or the Schulze Ring Shear tester (both available from Jenike and Johanson, Inc, Tyngsboro, MA).

The treatment of the inorganic pigment of this disclosure not only helps the processability of solid particulates by lowering the particle surface energy, but also can increase bulk density, which is beneficial to pigment handling and packing. The level of organic treatment in order to achieve substantially uniform coverage of at least a monolayer around each pigment particle must be proportional to the pigment surface area. The higher the surface area, the higher the demand for the organic treatment.

The RHI for the treated pigment of this disclosure is notably low. The bulk density, is slightly higher than that of the untreated pigment. The RHI is proportional to the quotient of the cohesive strength divided by the bulk density, with both strength and density measured under specified levels of compaction stress:

$$RHI = \frac{\text{cohesive strength}}{\text{bulk density}} \times constant$$

Since for the treated pigment of this disclosure the RHI is appreciably lower, and bulk density is only slightly greater than the corresponding quantities for the untreated pigment, the cohesive strength must be significantly low. Measurement of the cohesive strength independent of the RHI measurement, showed an important difference between the treated pigment of this disclosure and the standard (untreated) pigment. Powders with low values of cohesive strength are often easier to feed accurately with screw feeders and also easier to mix in the dry state with other powders.

Polymer Composition/Polymer melts:

In a polymer composition/melt, the melt-processable polymer that is employed together with the treated particle of this disclosure comprises a high molecular weight polymer.
Polymers used in this disclosure are high molecular weight melt processable polymers. By "high molecular weight" it is meant to describe polymers having a melt index value of 0.01 to 50, typically from 2 to 10 as measured by ASTM method D1238-98. By "melt-processable," it is meant a polymer that can be extruded or otherwise converted into shaped articles through a stage that involves obtaining the polymer in a molten state.
Polymers that are suitable for use in this disclosure include, by way of example but not limited thereto, polymers of ethylenically unsaturated monomers including olefins such as polyethylene, polypropylene, polybutylene, and copolymers of ethylene with higher olefins such as alpha olefins containing 4 to 10 carbon atoms or vinyl acetate; vinyls such as polyvinyl chloride, polyvinyl esters such as polyvinyl acetate, polystyrene, acrylic homopolymers and copolymers; phenolics; alkyds; amino resins; epoxy resins, polyamides, polyurethanes; phenoxy resins, polysulfones; polycarbonates; polyesters and chlorinated polyesters; polyethers; acetal resins; polyimides; and polyoxyethylenes. Mixtures of polymers are also contemplated.
Polymers suitable for use in the present disclosure also include various rubbers and/or elastomers, either natural or synthetic polymers based on copolymerization, grafting, or physical blending of various diene monomers with the above-mentioned polymers, all as generally known in the art.
Typically, the polymer may be selected from the group consisting of polyolefin, polyvinyl chloride, polyamide and polyester, and mixture of these. More typically used polymers are polyolefins. Most typically used polymers are polyolefins selected from the group consisting of polyethylene, polypropylene, and mixture thereof. A typical polyethylene polymer is low density polyethylene and linear low density polyethylene.

Other Additives

A wide variety of additives may be present in the polymer composition produced by the process of this disclosure as necessary, desirable or conventional. Such additives include polymer processing aids such as fluoropolymers, fluoroelastomers, etc., catalysts, initiators, antioxidants (e.g., hindered phenol such as butylated hydroxytoluene), blowing agent, ultraviolet light stabilizers (e.g., hindered amine light stabilizers or "HALS"), organic pigments including tinctorial pigments, plasticizers, antiblocking agents (e.g. clay, talc, calcium carbonate, silica, silicone oil, and the like) leveling agents, flame retardants, anti-cratering additives, and the like.

Preparation of the Polymer Composition

The present disclosure provides a process for preparing a particle-containing, high molecular weight polymer composition. Typically, in this process, the inorganic particle, such as titanium dioxide, may be surface treated in accordance with this disclosure. This step can be performed by any means known to those skilled in the art. Both dry and wet mixing may be suitable. In wet mixing, the particle may be slurried or dissolved in a solvent and subsequently mixed with the other ingredients.
In one embodiment of the disclosure, the treated particle may be contacted with a first high molecular weight melt processable polymer. Any melt compounding techniques, known to those skilled in the art may be used. Generally, the treated particle, other additives and melt-processable polymer are brought together and then mixed in a blending operation, such as dry blending, that applies shear to the polymer melt to form the particle containing, more typically pigmented, polymer. The melt-processable polymer is usually available in the form of particles, granules, pellets or cubes. Methods for dry blending include shaking in a bag or tumbling in a closed container. Other methods include blending using agitators or paddles. Treated particle, and melt-processable polymer may be co-fed using screw devices, which mix the treated particle, polymer and melt-processable polymer together before the polymer reaches a molten state. Alternately, the components may be fed separately into equipment where they may be melt blended, using any methods known in the art, including screw feeders, kneaders, high shear mixers, blending mixers, and the like. Typical methods use Banbury mixers, single and twin screw extruders, and hybrid continuous mixers.

Processing temperatures depend on the polymer and the blending method used and are well known to those skilled in the art. The intensity of mixing depends on the polymer characteristics.

The treated particle containing polymer composition produced by the process of this disclosure is useful in production of shaped articles. The amount of particle present in the particle-containing polymer composition and shaped polymer article will vary depending on the end use application. However, typically, the amount of particle in the polymer composition ranges from about 30 to about 90 wt%, based on the total weight of the composition, preferably, about 50 to about 80 wt%. The amount of particle in an end use, such as a shaped article, for example, a polymer film, can range from about 0.01 to about 20 wt%, and is preferably from about 0.1 to about 15 wt%, more preferably 5 to 10 wt%.

A shaped article is typically produced by melt blending the treated particle containing polymer which comprises a first high molecular weight melt-processable polymer, with a second high molecular weight melt-processable polymer to produce the polymer that can be used to form the finished article of manufacture. The treated particle containing polymer composition and second high molecular weight polymer are melt blended, using any means known in the art, as disclosed hereinabove. In this process, twin-screw extruders are commonly used. Co-rotating twin-screw extruders are available from Werner and Pfleiderer. The melt blended polymer is extruded to form a shaped article.

Inorganic particles treated in accordance with this disclosure are capable of being dispersed throughout the polymer melt. Typically the treated inorganic particle can be uniformly dispersed throughout the polymer melt. Such particles may exhibit some minor degree of clumping together within the polymer. A minor amount of the particles may also migrate to the surface of the polymer melt but any such migration would not be to a degree sufficient for the particle to qualify as a surface active material such as an antiblock agent.

In one embodiment, the disclosure relates to a polymer composition that can be used as a masterbatch. When used as a masterbatch, the polymer can provide both opacity and viscosity attributes to a polymer blend that can be utilized to form shaped articles.

The examples which follow, description of illustrative and typical embodiments of the present disclosure are not intended to limit the scope of the disclosure. Various modifications, alternative constructions and equivalents may be employed without departing from the true spirit and scope of the appended claims. In one embodiment, the polymer films may be substantially free of other conventional colorants and contain solely the treated titanium dioxide pigments of this disclosure.


## TEST METHODS


### Loose bulk density (BD) Measurement:

Loose bulk density (BD) was measured as the most loosely packed bulk density when a material was left to settle by gravity alone. The loose bulk density utilized in these examples was measured using a Gilson Company sieve pan having a volume of 150.58 cm$^3$. The material was hand sieved through a 10 mesh (2 mm) sieve over the tared pan until overfilled. Excess product above the rim of the pan was then carefully removed using a large spatula blade at a 45° angle from horizontal, taking care not to jostle the contents of the pan. The pan was then weighed and the loose bulk density was then calculated by dividing the pigment weight in the pan by the volume of the pan. Each measurement was repeated 3 times and the average was reported.


### Rathole Index (RHI) Measurement:

Using a Johanson Hang-Up Indicizer (Indicizer) from Johanson Innovations, Inc, the measured parameter know as rathole index (RHI), describes the degree of difficulty that can be expected in handling dry pigment in gravity flow situations, such as bins, hoppers, and feeders. The Indicizer compresses a known mass of pigment in a closed cell until the compaction stress corresponds to that expected in a bin or silo 10' (3.05 m) in diameter. It then measures the volume of the compacted pigment and the force necessary to press a punch through the compacted pigment. From this data, the Indicizer's internal computer calculates the compacted bulk density and the stress necessary to shear the pigment at the specified compaction stress. From these parameters, the RHI index is generated. The RHI is a predictor of the size of bin outlet necessary to prevent ratholing, a typical flow obstruction occurring in pigment handling. Larger values of the RHI imply worse flow properties of the pigment. The units are linear, so that a pigment with a 50% higher RHI may require a 50% larger silo outlet in order to flow reliably by gravity.

Cohesive strength (Schulze Ring Shear) test

The Schulze Ring Shear Tester, described in ASTM standard D 6773, is a device for measuring the resistance of a powder to shearing while it is confined under a specified level of compaction stress. It can also measure the volume and (and infer the bulk density) of the sample while conducting the test. Samples of pigment are loaded into a test cell, which is then weighed and placed in the tester. The computer controlled tester (Schulze RST-01-pc) then proceeds through a series of loadings and shearing actions to create a collection of shear data points. These points form a yield locus which is subsequently interpreted via Mohr circles to generate the unconfined yield strength (fc) corresponding to a particular level of compaction stress, known as the major principal stress. The unconfined yield strength is a descriptor of the ability of a compressed, cohesive powder to resist flow. Additional tests can be conducted under other stress levels to create additional yield loci, resulting in a graph (known as a flow function) of unconfined yield strength as a function of major principal stress. From such data, it is possible to compare the cohesiveness of two powders if they were to be subjected to prescribed loading conditions, or to compare their ratholing propensities.

Surface Area Measurement

The pigment surface area was measured using the 5 point nitrogen BET method using Micrometrics Tristar* 3000 Gas Adsorption Instrument and a Vac-Prep sample drying unit (Micrometrics Instrument Corp., Norcross, GA).

Carbon content Measurement

Carbon analysis was performed on each dry particle sample using LECO CS 632 Analyzer (LECO Corp. St. Joseph, MI).

EXAMPLES

Example 1:

A sample of rutile $TiO_2$ was treated with 10.2% silica and 6.4% alumina according to procedure described above. The treated pigment was filtered, washed and dried and 1500 g were added to a clean and dry, aluminum foil lined, metal pan. A solution of 50 wt.% trimethylol propane (TMP) in Ethyl Alcohol was sprayed onto the pigment from a small, clean spray bottle. In order to ensure that the pigment surface was covered as uniformly as possible the pigment mass was mixed and turned over with a clean and dry metal spoon. TheTMP/Ethyl Alcohol solution addition was then repeated several times until a total of 60 grams of solution were added. The pan was placed in a ventilated hood and pigment was allowed to air dry for 48 hours. A V-cone blender was used to break up any chunks of the TMP treated pigment as follows: V-cone tumble + intensifier bar for 10 minutes followed by V-cone tumble only for 5 minutes.

The sample was dry milled in a 8" (20.3 cm) micronizer at a steam-to-pigment ratio (S/P) of 4 and a steam temp of 300°C. The product was tested for surface area, carbon content, rathole index, % residue on 10 mesh (2 mm) screen and bulk density with results shown in Table 1. The product was also tested for cohesive strength with results shown in Figure 1.

Example 2:

Example 1 was repeated with the following exceptions: 2000 g of this pigment were added to a clean and dry, aluminum foil lined, metal pan instead of 1500 g and treated with a total of 40 grams of theTMP/Ethyl Alcohol solution instead of 60 grams. The product was tested for surface area, carbon content, rathole index, % residue on 10 mesh (2 mm) screen and bulk density with results shown in Table 1.

Comparative Example 1:

Example 2 was repeated with the following exceptions: No TMP/ethyl alcohol solution was added to the treated pigment and no drying, was therefore required. The product was tested for surface area, carbon content, rathole index, % residue on 10 mesh (2 mm) screen and bulk density with results shown in Table 1.

Comparative Example 2:

A sample of commercial rutile $TiO_2$ having the following oxide treatment 10.2% silica and 6.4% alumina and no organic treatment, was tested for surface area, Carbon content, rathole index, % residue on 10 mesh (2 mm) screen and bulk density. Results are shown in Table 1. The product was also tested for cohesive strength with results shown in Figure 1.

Example 3:

Example 2 was repeated with the following exceptions: a total of 64 grams of TMP/ethyl alcohol solution were added. The product was tested for surface area, carbon content, rathole index, %residue on 10 mesh (2 mm) screen and bulk density with results shown in Table 1.

Table 1:

| Sample | % TMP* | BET Surface Area (m$^2$/g) | RHI from Johanson Indicizer** | Screen on 10 mesh (2 mm), soft lumps % | Loose Bulk Density (g/cc) |
|---|---|---|---|---|---|
| E1 | 1.90 | 56.4 | 8.35 | 1.0 | 0.3686 |
| E2 | 0.94 | 52.9 | 8.59 | 1.0 | 0.4088 |
| CE1 | 0.0 | 56.39 | 12.20 | 1.3 | 0.3084 |
| CE2 | 0.0 | 54.99 | 12.88 | 1.4 | 0.4051 |
| E3 | 1.58 | 59.1 | 7.18 | 4.2 | 0.3899 |
| * calculated from Carbon content<br>** average of two independent measurements | | | | | |

Samples E1, E2, and E3 show substantially improved (ie, reduced) values of RHI versus the comparative examples CE1 and CE2. The loose bulk densities produced by the examples generally equal or exceed those measured for the comparative examples. It should be noted that sample CE2 experienced minimal handling in the testing and could expected to retain some previous consolidation (packing) and densification associated with its prior handling. The proportion of the pigment that was soft lumps is not noteworthy for tests conducted at this scale.

A Schulze Ring Shear Tester was used to measure the cohesive strength of two samples of pigment, the first tested as described in this disclosure (E1) and the second without the additional treatment (CE2). Results are shown in Figure 1. At all levels of consolidation stress (Sigma 1), the treated pigment exhibited lower values of unconfined yield strength, fc.

Example 4:

Product collected from Examples 1 and 2, as well as a control sample derived from an untreated commercial product are compounded into DuPont 20 polyethylene (low density polyethylene) along with butylated hydroxytoluene (BHT) and Tinuvin® 770 (Ciba Specialty Chemicals, Tarrytown, NY) using a standard two-roll milling procedure (35 mil roller gap, 220 °F (104.4 °C) and 240 °F (115.6 °C) roller temperatures). The resulting thick films (2.6 wt% pigment, 0.3 wt% BHT, 0.3 wt% Tinuvin® 770) are then hot pressed (325-350 °F (~162.8-176.7 °C), 50,000 psi (~3516.2 kg/cm$^2$) for 2 minutes) into plaques using a pre-made template.

**Claims**

1. A polymer composition comprising a high molecular weight melt processable polymer and a treated inorganic pigment, wherein the treated inorganic pigment comprises an inorganic pigment having a pigment surface area of 30 to 75 m$^2$/g; wherein the pigment surface is treated with an organic treating agent comprising a polyalkanol alkane or a polyalkanol amine, present in the amount of at least 1.5% based on the total weight of the treated inorganic pigment, and wherein the treated inorganic pigment has a RHI (rat hole index) of 7 to 11, as measured with a Johanson Hang-Up Indicizer.

2. The polymer composition of claim 1 wherein the high molecular weight melt processable polymer is selected from the group consisting of polymer of ethylenically unsaturated monomers; copolymer of ethylene with higher olefins; vinyl polymer, polyvinyl ester; polystyrene; acrylic homopolymer; acrylic copolymer; phenolic polymer; alkyd polymer; amino resin; epoxy resin, polyamide, polyurethane; phenoxy resin, polysulfone; polycarbonate; polyester and chlorinated polyester; polyether; acetal resin; polyimide; polyoxyethylenes; rubber, elastomer; natural or synthetic polymer based on copolymerization, grafting, or physical blending of various diene monomers; and mixtures thereof.

3. The polymer composition of claim 2 wherein the high molecular weight melt processable polymer is selected from the group consisting of polyolefin, polyvinyl chloride, polyamide, polyester, and mixtures thereof.

4. The polymer composition of claim 3 wherein the polyolefin is selected from the group consisting of polyethylene, polypropylene, and mixture thereof.

5. The polymer composition of claim 1 wherein treated inorganic pigment is present in the amount of 30 to 90% by weight, based on the total weight of the polymer composition.

6. The polymer composition of claim 1 wherein the inorganic pigment is ZnS, $TiO_2$, $CaCO_3$, $BaSO_4$, ZnO, $MoS_2$, silica, talc or clay, preferably wherein the inorganic pigment is titanium dioxide.

7. The polymer composition of claim 1 wherein the pigment surface area is 40 to 70 $m^2/g$, preferably wherein the pigment surface area is about 45 to about 65 $m^2/g$.

8. The polymer composition of claim 1 wherein the organic treating agent is a polyalkanol alkane, preferably wherein the polyalkanol alkane is trimethylolpropane, trimethylolethane, glycerol, ethylene glycol, propylene glycol, 1,3 propanediol, or pentaerythritol, more preferably wherein the polyalkanol alkane is trimethylolpropane or trimethylolethane.

9. The polymer composition of claim 1 wherein the organic treating agent is a polyalkanol amine, preferably wherein the polyalkanol amine is 2-amino-2methyl-1-propanol, triethanol amine, monoethanol amine, diethanol amine, 1-amino 2-propanol, or 2-amino ethanol, more preferably wherein the polyalkanol amine is 2-amino-2methyl-1-propanol or triethanol amine.

10. The polymer composition of claim 1 wherein the organic treating agent is present in the amount of at least 1.8%, preferably at least 2%, based on the total weight of the treated pigment.

11. The polymer composition of claim 1 wherein the inorganic pigment is further treated with metal oxides.

12. The polymer composition of claim 11 wherein the metal oxide treatment comprises silica, alumina, tungsten, zirconia, zinc oxide, or molybdenum oxide, preferably wherein the metal oxides are present in the amount of 0.1 to 20 wt%, based on the total weight of the treated pigment.

13. The polymer composition of claim 1 comprising a masterbatch.

14. A part prepared from a polymer composition according to claim 1.

15. The part of claim 14 in the form of a shaped article.

**Patentansprüche**

1. Polymerzusammensetzung umfassend ein hochmolekulares schmelzverarbeitbares Polymer und ein behandeltes anorganisches Pigment, wobei das behandelte anorganische Pigment ein anorganisches Pigment umfasst, das einen Pigmentoberflächenbereich von 30 bis 75 $m^2/g$ aufweist; wobei die Pigmentoberfläche mit einem organischen Behandlungsmittel behandelt wird, das ein Polyalkanolalkan oder ein Polyalkanolamin umfasst, das in der Menge von mindestens 1,5 %, auf das Gesamtgewicht des behandelten anorganischen Pigments bezogen, vorliegt und wobei das behandelte anorganische Pigment einen RHI (Schachtbildungsindex) vom 7 bis 11, wie durch einen Johanson Hang-Up Indicizer gemessen, aufweist.

2. Polymerzusammensetzung nach Anspruch 1, wobei das hochmolekulare schmelzverarbeitbare Polymer aus der Gruppe ausgewählt ist bestehend aus Polymer von ethylenisch ungesättigten Monomeren; Copolymeren von Ethylen mit höheren Olefinen; Vinylpolymer, Polyvinylester; Polystyrol; Acrylhomopolymer; Acrylcopolymer; Phenolpolymer; Alkydpolymer; Aminoharz; Epoxidharz, Polyamid, Polyurethan; Phenoxyharz, Polysulfon; Polycarbonat; Polyester und chloriertem Polyester; Polyether; Acetalharz; Polyimid; Polyoxyethylenen; Kautschuk, Elastomer; Natur- oder Synthesepolymer auf der Basis von Copolymerisation, Pfropfen oder physikalischem Mischen verschiedener Dienmonomere; und Mischungen davon.

3. Polymerzusammensetzung nach Anspruch 2, wobei das hochmolekulare schmelzverarbeitbare Polymer aus der Gruppe ausgewählt ist bestehend aus Polyolefin, Polyvinylchlorid, Polyamid, Polyester und Mischungen davon.

4. Polymerzusammensetzung nach Anspruch 3, wobei das Polyolefin aus der Gruppe ausgewählt ist bestehend aus Polyethylen, Polypropylen und Mischungen davon.

5. Polymerzusammensetzung nach Anspruch 1, wobei behandeltes anorganisches Pigment in der Menge von 30 bis 90 Gew.-%, auf das Gesamtgewicht der Polymerzusammensetzung bezogen, vorliegt.

6. Polymerzusammensetzung nach Anspruch 1, wobei das anorganische Pigment ZnS, $TiO_2$, $CaCO_3$, $BaSO_4$, ZnO, $MoS_2$, Siliciumdioxid, Talkum oder Ton ist, wobei bevorzugt das anorganische Pigment Titandioxid ist.

7. Polymerzusammensetzung nach Anspruch 1, wobei der Pigmentoberflächenbereich 40 bis 70 m$^2$/g beträgt, wobei bevorzugt der Pigmentoberflächenbereich etwa 45 bis etwa 65 m$^2$/g beträgt.

8. Polymerzusammensetzung nach Anspruch 1, wobei das organische Behandlungsmittel ein Polyalkanolalkan ist, wobei bevorzugt das Polyalkanolalkan Trimethylolpropan, Trimethylolethan, Glycerin, Ethylenglycol, Propylenglycol, 1,3-Propandiol oder Pentaerythrit ist, wobei noch bevorzugter das Polyalkanolalkan Trimethylolpropan oder Trimethylethan ist.

9. Polymerzusammensetzung nach Anspruch 1, wobei das organische Behandlungsmittel ein Polyalkanolamin ist, wobei bevorzugt das Polyalkanolamin 2-Amino-2-methyl-1-propanol, Triethanolamin, Monoethanolamin, Diethanolamin, 1-Amino-2-propanol oder 2-Aminoethanol ist, wobei noch bevorzugter das Polyalkanolamin 2-Amino-2-methyl-1-propanol oder Triethanolamin ist.

10. Polymerzusammensetzung nach Anspruch 1, wobei das organische Behandlungsmittel in der Menge von mindestens 1,8 %, bevorzugt mindestens 2 %, auf das Gesamtgewicht des behandelten Pigments bezogen, vorliegt.

11. Polymerzusammensetzung nach Anspruch 1, wobei das anorganische Pigment ferner mit Metalloxiden behandelt wird.

12. Polymerzusammensetzung nach Anspruch 11, wobei die Metalloxidbehandlung Siliciumdioxid, Aluminiumoxid, Wolfram, Zirconiumdioxid, Zinkoxid oder Molybdänoxid umfasst, wobei bevorzugt die Metalloxide in der Menge von 0,1 bis 20 Gew.-%, auf das Gesamtgewicht des behandelten Pigments bezogen, vorliegen.

13. Polymerzusammensetzung nach Anspruch 1 umfassend ein Masterbatch.

14. Teil, das aus einer Polymerzusammensetzung nach Anspruch 1 hergestellt ist.

15. Teil nach Anspruch 14 in Form eines gestalteten Artikels.

**Revendications**

1. Composition polymère comprenant un polymère de haut poids moléculaire pouvant être transformé à l'état fondu et un pigment inorganique traité, où le pigment inorganique traité comprend un pigment inorganique ayant une surface spécifique de pigment de 30 à 75 m$^2$/g; où la surface de pigment est traitée avec un agent organique de traitement comprenant un polyalcanol alcane ou une polyalcanol amine, présent(e) en la quantité d'au moins 1,5 % sur la base du poids total du pigment inorganique traité, et où le pigment inorganique traité a un RHI (indice de trou de cheminée) de 7 à 11, tel que mesuré avec un indice d'accrochage de Johanson (Johanson Hang-Up Indicizer).

2. Composition polymère selon la revendication 1 où le polymère de haut poids moléculaire pouvant être transformé à l'état fondu est sélectionné dans le groupe constitué d'un polymère de monomères éthyléniquement insaturés; d'un copolymère d'éthylène avec des oléfines supérieures; d'un polymère de vinyle, de poly(ester de vinyle); du polystyrène; d'un homopolymère acrylique; d'un copolymère acrylique; d'un polymère phénolique; d'un polymère alkyde; d'une résine aminée; d'une résine époxy, d'un polyamide, d'un polyuréthane; d'une résine phénoxy, d'une polysulfone; d'un polycarbonate; de polyester et de polyester chloré; de polyéther; de résine d'acétal; de polyimide; de polyoxyéthylènes; de caoutchouc, d'élastomère; de polymère d'origine naturelle ou synthétique basé sur la copolymérisation, le greffage, ou le mélange physique de divers monomères diènes; et de leurs mélanges.

3. Composition polymère selon la revendication 2 où le polymère de haut poids moléculaire pouvant être transformé à l'état fondu est sélectionné dans le groupe constitué d'une polyoléfine, du poly(chlorure de vinyle), du polyamide, du polyester, et de leurs mélanges.

4. Composition polymère selon la revendication 3 où la polyoléfine est sélectionnée dans le groupe constitué du polyéthylène, du polypropylène, et de leur mélange.

5. Composition polymère selon la revendication 1 où le pigment inorganique traité est présent en la quantité de 30 à 90 % en poids, sur la base du poids total de la composition polymère.

6. Composition polymère selon la revendication 1 où le pigment inorganique est ZnS, TiO$_2$, CaCO$_3$, BaSO$_4$, ZnO, MoS$_2$, la silice, le talc ou l'argile, préférablement où le pigment inorganique est le dioxyde de titane.

7. Composition polymère selon la revendication 1 où la surface spécifique du pigment est de 40 à 70 m$^2$/g, préférablement où la surface spécifique du pigment est d'environ 45 à environ 65 m$^2$/g.

8. Composition polymère selon la revendication 1 où l'agent organique de traitement est un polyalcanol alcane, préférablement où le polyalcanol alcane est le triméthylolpropane, le triméthyloléthane, le glycérol, l'éthylène glycol, le propylène glycol, le 1,3-propanediol, ou le pentaérythritol, plus préférablement où le polyalcanol alcane est le triméthylolpropane ou le triméthyloléthane.

9. Composition polymère selon la revendication 1 où l'agent organique de traitement est une polyalcanol amine, préférablement où la polyalcanol amine est le 2-amino-2-méthyl-1-propanol, la triéthanol amine, la monoéthanol amine, la diéthanol amine, le 1-amino-2-propanol, ou le 2-amino éthanol, plus préférablement où la polyalcanol amine est le 2-amino-2-méthyl-1-propanol ou la triéthanol amine.

10. Composition polymère selon la revendication 1 où l'agent organique de traitement est présent en la quantité d'au moins 1,8 %, préférablement d'au moins 2 %, sur la base du poids total du pigment traité.

11. Composition polymère selon la revendication 1 où le pigment inorganique est traité en outre avec des oxydes métalliques.

12. Composition polymère selon la revendication 11 où le traitement avec les oxydes métalliques comprend la silice, l'alumine, le tungstène, l'oxyde de zirconium, l'oxyde de zinc, ou l'oxyde de molybdène, préférablement où les oxydes métalliques sont présents en la quantité de 0,1 à 20 % en pds, sur la base du poids total du pigment traité.

13. Composition polymère selon la revendication 1 comprenant un lot maître.

14. Pièce préparée à partir d'une composition polymère selon la revendication 1.

15. Pièce selon la revendication 14 se présentant sous la forme d'un article profilé.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2194065 A
- EP 2067747 A1
- EP 1760116 A1
- US RE27818 E
- US 4125412 A

**Non-patent literature cited in the description**

- The Pigment Handbook. John Wiley & Sons, 1988, vol. 1
- **DIETMAR SCHULZE.** Powders and Bulk Solids: Behavior, Characterization, Storage and Flow. Springer, 2007